# EUROPEAN PATENT SPECIFICATION

(11) **EP 2 978 201 B1**
(45) Date of publication and mention of the grant of the patent: **26.04.2023**
(21) Application number: 15175499.1
(22) Date of filing: 06.07.2015
(51) Int. Cl.: H04M 3/42

(54) **METHOD AND DEVICE FOR IDENTIFYING TELEPHONE CALL**
VERFAHREN UND VORRICHTUNG ZUR IDENTIFIZIERUNG EINES TELEFONANRUFS
PROCÉDÉ ET DISPOSITIF POUR L'IDENTIFICATION D'APPEL TÉLÉPHONIQUE

(30) Priority: 21.07.2014 CN 201410347054
(43) Date of publication of application: 27.01.2016
(73) Proprietor: Xiaomi Inc., Beijing 100085 (CN)
(72) Inventor: LIU, Yuxiang, 100085 Beijing (CN); BAI, Zhiyong, 100085 Beijing (CN); QIAO, Zhongliang, 100085 Beijing (CN); Wang, Botian, 100085 Beijing (CN)
(74) Representative: Cabinet Beau de Loménie

(56) References cited:
- WO-A1-2012/154730
- WO-A1-2014/012398
- WO-A2-2007/064686
- US-A1- 2008 159 501

## Description

### TECHNICAL FIELD

The present disclosure generally relates to the communication field, and more particularly, to a method and a device for identifying a telephone call.

### BACKGROUND

A falsified-number incoming telephone call refers to a telephone call made by a criminal who, by using flaws of telecom operating systems, masquerades as any one number to call someone else to go in for fraudulent conducts.

A common technology used by criminals comprises sending a fake identity to telecom operators such as "110" (police) using a telephone interface of Voice Over Internet Protocol (short for VOIP), so that the telecom operators directly convey the identity to the telephone called party as the incoming phone number. The incoming call is directly displayed as "110" to the telephone called party, which makes the telephone called party unable to determine whether the call is an authentic call or a deceptive call. Currently, a known technology for preventing deceptive callings comprises controlling using number coding rules. For example, a deceptive call is accessed from abroad through VOIP, and by this manner, a prefix such as "00192" may be added to the calling number during transmission. Known technologies may identify such prefix so as to determine whether the incoming call is a falsified-number incoming telephone call.

In other known technologies, since an incoming call which has a prefix "00192" may be a falsified-number incoming telephone call or may be an authentic phone call from abroad, the method for identifying a falsified-number incoming telephone call by controlling a prefix may make mistakes; and, if the falsified number used by the criminals conforms to the Chinese mainland number rule, such as "01095555" (China Merchants Bank), identifying a falsified-number incoming telephone call by controlling a prefix cannot perform determination. Therefore, the known have some limitations.
Documents WO 2012/154730, WO 2007064686, US 2008/159501, and WO 2014/012398 disclose known methods for identifying a falsified-number incoming telephone call.

### SUMMARY

In order to solve the problems in related technologies that the method for identifying falsified-number incoming telephone call may make mistakes and have limitations, the present disclosure provides a method and a device for identifying a telephone call. The technical solutions are set forth as follows.

According to a first aspect of embodiments of the present disclosure, a method for identifying a telephone call according to claim 1 is provided.

According to a second aspect of the embodiment of the disclosure, a system for identifying a telephone call according to claim 5 is provided.

The present invention also provides a computer program, which when executing on a processor of a terminal, performs the above method.

This program can use any programming language and take the form of source code, object code or a code intermediate between source code and object code, such as a partially compiled form, or any other desirable form.

The present invention also provides a recording medium readable by a computer and having recorded thereon a computer program including instructions for executing the steps of a method as defined above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The technical solutions provided in the embodiments of the present disclosure may include the following advantageous effects: said entity being affiliated with a telephone number of the telephone calling party since the second telephone apparatus of the assigned entity is the authentic source of the telephone calling party, the determination result on whether the second telephone apparatus of the assigned entity is calling the called party currently is real and effective, and thereby whether the telephone call is falsified-number telephone call may be correctly identified; meanwhile, the identifying method is based on the telephone number of the telephone calling party and confirms using the aspect of assigned entity; however, the method has no relation with the coding rule of a telephone number, and thus the method is applicable in identification of all telephone numbers; furthermore, when it is identified that the telephone call is a falsified-number telephone call, a prompt is given to make the telephone called party identify the incoming call when receiving the incoming call from the telephone calling party, and thereby the telephone called party is prevented to be deceived.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart showing a method for identifying a telephone call according to an exemplary embodiment;
Figs. 2 and 3 are flow charts showing another method for identifying a telephone call according to an exemplary embodiment;
Fig. 4 is a block diagram showing a device for identifying a telephone call according to an exemplary embodiment;
Figs. 5 and 6 are block diagrams showing another device for identifying a telephone call according to an exemplary embodiment; and
Fig. 7 is a block diagram showing a device for identifying a telephone call according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

To facilitate understanding of the technical solutions provided by the present disclosure, a telephone call (including VOIP call) process is introduced first. A telephone calling party (such as a telephone apparatus A) sends a telephone calling request to a server (including a switch) of a telecom operator. The telephone calling request includes a calling telephone number (the telephone number of the calling party) and a called telephone number (the telephone number of the telephone called party). The server of the operator obtains a link for arriving to the telephone called party (such as a telephone apparatus B) according to the called telephone number and transmits the telephone call from the telephone calling party to the telephone called party via the link, thereby establishing a telephone call between the telephone calling party and the telephone called party.

In the embodiment, the telephone apparatus includes telephones such as wired phones, wireless phones and smart phones, and the telephone apparatus also includes a VOIP apparatus such as a computer and a mobile terminal.

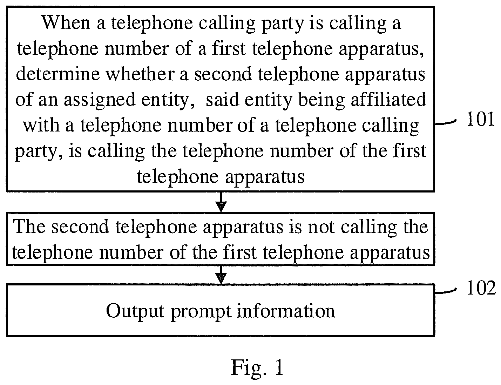

Fig. 1 is a flow chart showing a method for identifying a telephone call according to an exemplary embodiment. This method may be applied in a first telephone apparatus, as shown in Fig. 1, and the method includes the following steps:
In step 101, when a telephone calling party is calling a telephone number of a first telephone apparatus, it is determined whether a second telephone apparatus of an assigned entity, said entity being affiliated with a telephone number of the telephone calling party, is calling the telephone number of the first telephone apparatus.

The telephone number of the second telephone apparatus is the telephone number of the telephone calling party.

When the second telephone apparatus is not calling the telephone number of the first telephone apparatus, step 102 is performed. When the second telephone apparatus is calling the telephone number of the first telephone apparatus, it is determined that the telephone call from the telephone calling party is not a falsified-number telephone call.

In step 102, prompt information is output.

The prompt information is for indicating that the telephone call from the telephone calling party is a falsified-number telephone call.

In the embodiment, when a telephone calling party is calling a telephone number of a first telephone apparatus, it is determined whether a second telephone apparatus of an assigned entity, said entity being affiliated with a telephone number of the telephone calling party, is calling the telephone number of the first telephone apparatus; the telephone number of the second telephone apparatus is the telephone number of the telephone calling party; when the second telephone apparatus is not calling the telephone number of the first telephone apparatus, prompt information is output; the prompt information is for indicating that the telephone call from the telephone calling party is a falsified-number telephone call; since the second telephone apparatus of the assigned entity is the authentic source of the telephone calling party, the determination result about whether the second telephone apparatus of the assigned entity is calling the telephone called party currently is real and effective, and thereby whether the telephone call is falsified-number telephone call may be correctly identified; meanwhile, the identifying method is based on the telephone number of the telephone calling party and confirms from the aspect of assigned entity but has no relation with the coding rule of telephone number, and thus the method is applicable in identification of all telephone numbers; furthermore, when it is identified that the telephone call is a falsified-number telephone call, a prompt is given to make the telephone called party identify the incoming call when receiving the incoming call from the telephone calling party, and thereby the telephone called party is prevented to be deceived.

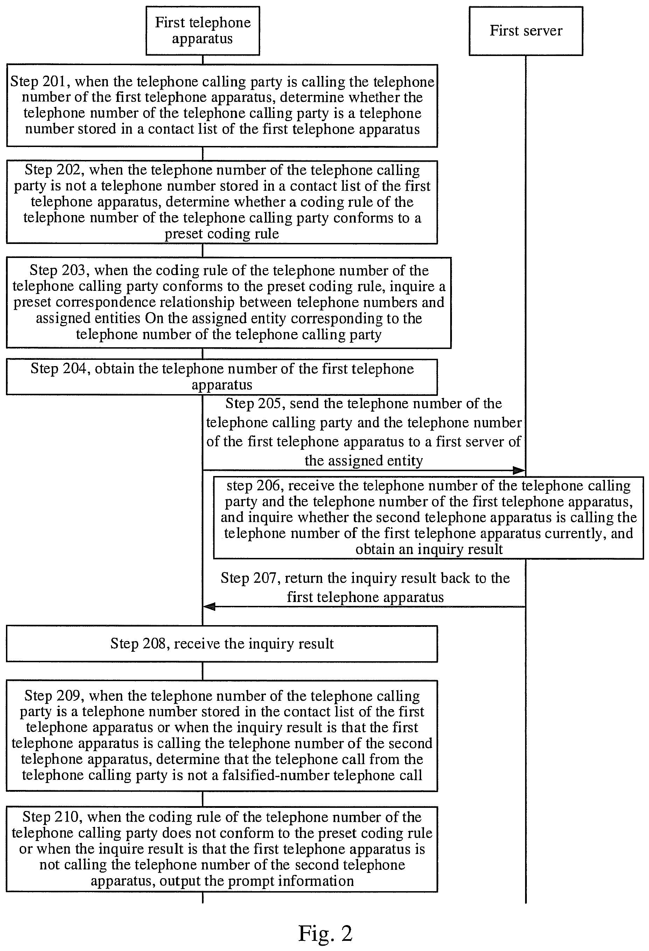

Fig. 2 is a flow chart showing a method for identifying a telephone call according to an exemplary embodiment, as shown in Fig. 2, and the method may include the following steps:
In step 201, when the telephone calling party is calling the telephone number of the first telephone apparatus, the first telephone apparatus determines whether the telephone number of the telephone calling party is a telephone number stored in a contact list of the first telephone apparatus.

When the telephone number of the calling party is not a telephone number stored in the contact list of the first telephone apparatus, step 202 is performed; when the telephone number is a telephone number stored in the contact list of the first telephone apparatus, step 209 is performed.

The contact list stores user-trusted telephone numbers. When the telephone number is not a telephone number stored in the contact list, it may be deemed that the telephone number is a strange telephone number, and step 202 is performed.

In step 202, the first telephone apparatus determines whether a coding rule of the telephone number of the telephone calling party conforms to a preset coding rule.

When the coding rule of the telephone number of the telephone calling party conforms to the preset coding rule, step 203 is performed; when the coding rule of the telephone number of the telephone calling party does not conform to the preset coding rule, step 210 is performed.

The preset coding rule may employ domestic and abroad telephone coding rules formulated by operators. When the coding rule of the telephone number does not conform to the preset coding rule, for example, the telephone number is constituted of a series of numbers (such as "0123456789"), step 210 is performed.

In step 203, the first telephone apparatus inquires a correspondence relationship between telephone numbers and assigned entities on the assigned entity corresponding to the telephone number of the telephone calling party.

Firstly, the first telephone apparatus inquires the telephone number matching with the telephone number of the telephone calling party in the preset correspondence relationship between telephone numbers and assigned entities. Then, when the telephone number matching with the telephone number of the telephone calling party is inquired, the assigned entity corresponding to the telephone number matching with the telephone number of the telephone calling party is determined; when no telephone number matching with the telephone number of the telephone calling party is inquired, exit the flow chart.

The correspondence relationship between telephone numbers and assigned entities encompasses telephone numbers of entities (for example, public institutions such as local police stations or courts, and famous enterprises and the like) open to public. Criminals often masquerade as the telephone numbers of these entities to conduct fraudulent activities.

The first telephone apparatus may download the correspondence relationship between telephone numbers and assigned entities from specified servers. A manual collecting and entry method may be used to store the correspondence relationship between telephone numbers and assigned entities in the specified servers.

In step 204, the first telephone apparatus obtains the telephone number of the first telephone apparatus.

The first telephone apparatus may read its own telephone number from a SIM card, or may read its own telephone number by related technologies, and the present disclosure does not impose limitations on this.

In step 205, the first telephone apparatus sends the telephone number of the telephone calling party and the telephone number of the first telephone apparatus to a first server of the assigned entity.

The first server is configured to inquire whether the second telephone apparatus is calling the telephone number of the first telephone apparatus currently. The telephone number of the second telephone apparatus is the telephone number of the telephone calling party.

After the first telephone apparatus obtains the assigned entity, it may obtain the address of the first server of the assigned entity, and may send the telephone number of the telephone calling party and the telephone number of the first telephone apparatus to the first server of the assigned entity via internet.

In step 206, the first server receives the telephone number of the telephone calling party and the telephone number of the first telephone apparatus, and inquires whether the second telephone apparatus is calling the telephone number of the first telephone apparatus currently, and obtains an inquiry result.

The inquiry result is that the second telephone apparatus is calling the telephone number of the first telephone apparatus currently or that the second telephone apparatus is not calling the telephone number of the first telephone apparatus currently.

The first server is configured to manage operations of all telephone apparatus in the assigned entity. The first server may detect, among the managed telephone apparatus, a telephone apparatus which is under a working state, and may detect whether the telephone apparatus which is under the working state are calling telephone numbers of other telephone apparatus currently.

The term "currently" herein may refer to the time when the first server receives the telephone number of the telephone calling party and the telephone number of the first telephone apparatus.

In step 207, the first server returns the inquiry result back to the first telephone apparatus.

The first server returns the inquiry result back to the first telephone apparatus via networks.

In step 208, the first telephone apparatus receives the inquiry result.

When the inquiry result is that the second telephone apparatus is calling the telephone number of the first telephone apparatus currently, step 209 is performed; when the inquiry result is that the second telephone apparatus is not calling the telephone number of the first telephone apparatus currently, step 210 is performed.

By steps 203 to 208, it is achieved that the first telephone apparatus determines whether the second telephone apparatus of the assigned entity, said entity being affiliated with a telephone number of a telephone calling party, is calling the telephone number of the first telephone apparatus.

In step 209, the first telephone apparatus determines that the telephone call from the telephone calling party is not a falsified-number telephone call.

In step 210, the first telephone apparatus outputs the prompt information.

The prompt information is for indicating that the telephone call from the telephone calling party is a falsified-number telephone call. When it is determined that the telephone call is a falsified-number telephone call, the first telephone apparatus may prompt the user, for example by popping-up a window on the screen.

In the embodiment, when a telephone calling party is calling a telephone number of a first telephone apparatus, whether a second telephone apparatus of an assigned entity, said entity being affiliated with a telephone number of the telephone calling party, is calling the telephone number of the first telephone apparatus is determined; the telephone number of the second telephone apparatus is the telephone number of the telephone calling party; when the second telephone apparatus is not calling the telephone number of the first telephone apparatus, prompt information is output; the prompt information is for indicating that the telephone call from the telephone calling party is a falsified-number telephone call; since the second telephone apparatus of the assigned entity is the authentic source of the telephone calling party, the determination result about whether the second telephone apparatus of the assigned entity is calling the telephone called party is real and effective, and thereby whether the telephone call is falsified-number telephone call may be correctly identified; meanwhile, the identifying method is based on the telephone number of the telephone calling party and confirms from the aspect of assigned entity but has no relation with the coding rule of telephone number, and thus the method is applicable in identification of all telephone numbers; furthermore, when it is identified that the telephone call is a falsified-number telephone call, a prompt is given to make the telephone called party identify the incoming call when receiving the incoming call from the telephone calling party, and thereby the telephone called party is prevented to be deceived.

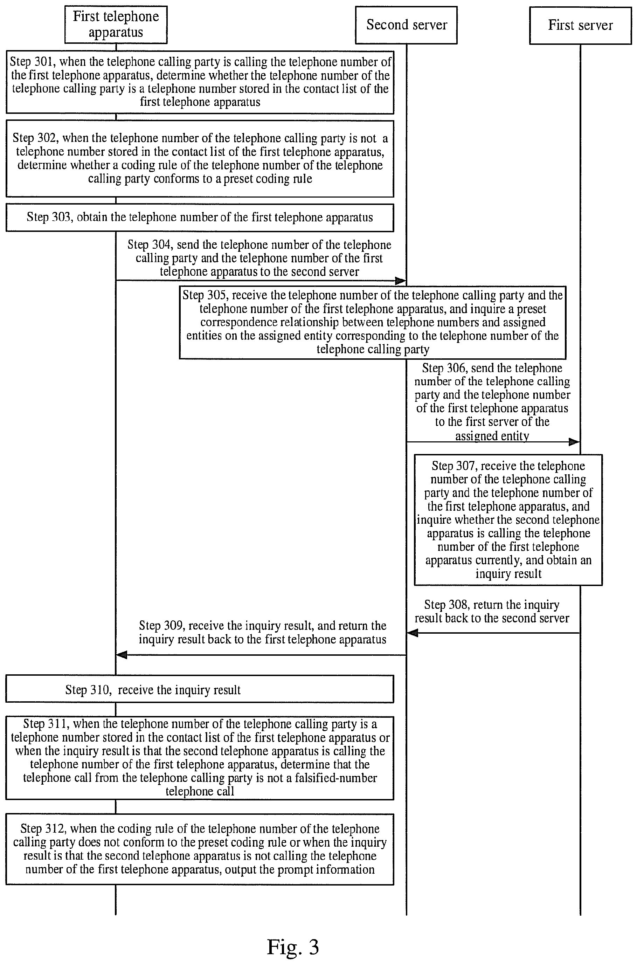

Fig. 3 is a flow chart showing a method for identifying a telephone call according to an exemplary embodiment, as shown in Fig. 3, and the method includes the following steps:
In step 301, when a telephone calling party is calling a telephone number of a first telephone apparatus, the first telephone apparatus determines whether the telephone number of the telephone calling party is a telephone number stored in the contact list of the first telephone apparatus.

When the telephone number of the telephone calling party is not a telephone number stored in the contact list of the first telephone apparatus, step 302 is performed; when the telephone number of the telephone calling party is a telephone number stored in the contact list of the first telephone apparatus, step 311 is performed.

Step 301 is the same as step 201, and the descriptions thereof are omitted.

In step 302, the first telephone apparatus determines whether a coding rule of the telephone number of the telephone calling party conforms to a preset coding rule.

When the coding rule of the telephone number of the telephone calling party conforms to the preset coding rule, step 303 is performed; when the coding rule of the telephone number of the telephone calling party does not conform to the preset coding rule, step 312 is performed.

Step 302 is the same as step 202, and the descriptions thereof are omitted.

In step 303, the first telephone apparatus obtains the telephone number of the first telephone apparatus.

Step 303 is the same as step 204, and the descriptions thereof are omitted.

In step 304, the first telephone apparatus sends the telephone number of the telephone calling party and the telephone number of the first telephone apparatus to a second server.

The first telephone apparatus sends the telephone number of the telephone calling party and the telephone number of the first telephone apparatus to the second server via networks.

In step 305, the second server receives the telephone number of the telephone calling party and the telephone number of the first telephone apparatus, and inquires the assigned entity corresponding to the telephone number of the telephone calling party in the preset correspondence relation between telephone numbers and assigned entities.

Firstly, the second server inquires the telephone number matching with the telephone number of the telephone calling party, then, when the telephone number matching with the telephone number of the telephone calling party is inquired, the assigned entity corresponding to the telephone number matching with the telephone number of the telephone calling party is obtained. When no telephone number matching with the telephone number of the telephone calling party is inquired, exit the flow chart.

In step 306, the second server sends the telephone number of the telephone calling party and the telephone number of the first telephone apparatus to the first server of the assigned entity.

The second server sends the telephone number of the telephone calling party and the telephone number of the first telephone apparatus to the first server of the assigned entity via networks.

In step 307, the first server receives the telephone number of the telephone calling party and the telephone number of the first telephone apparatus, and inquires whether the second telephone apparatus is calling the telephone number of the first telephone apparatus currently, and obtains an inquiry result.

The inquiry result is that the second telephone apparatus is calling the telephone number of the first telephone apparatus currently or that the second telephone apparatus is not calling the telephone number of the first telephone apparatus currently.

The telephone number of the second telephone apparatus is the telephone number of the telephone calling party.

Step 307 is the same as step 206, and the descriptions thereof are omitted.

In step 308, the first server returns the inquiry result back to the second server.

The first server returns the inquiry result back to the second server via networks.

In step 309, the second server receives the inquiry result, and returns the inquiry result back to the first telephone apparatus.

In step 310, the first telephone apparatus receives the inquiry result.

When the inquiry result is that the second telephone apparatus is calling the telephone number of the first telephone apparatus currently, step 311 is performed; when the inquiry result is that the second telephone apparatus is not calling the telephone number of the first telephone apparatus currently, step 312 is performed.

By steps 303-310, the determination of whether the second telephone apparatus of the assigned entity, said entity being affiliated with a telephone number of a telephone calling party, is calling the first telephone apparatus is achieved.

In step 311, the first telephone apparatus determines the telephone call from the telephone calling party is not a falsified-number telephone call.

In step 312, the first telephone apparatus outputs prompt information.

The prompt information is for indicating that the telephone call from the telephone calling party is a falsified-number telephone call. When it is determined that the telephone call is a falsified-number telephone call, the first telephone apparatus may prompt the user, for example by popping-up window on the screen.

In the embodiment, when a telephone calling party is calling a telephone number of a first telephone apparatus, whether a second telephone apparatus of an assigned entity, said entity being affiliated with a telephone number of the telephone calling party, is calling the telephone number of the first telephone apparatus is determined; the telephone number of the second telephone apparatus is the telephone number of the telephone calling party; when the second telephone apparatus is not calling the telephone number of the first telephone apparatus, prompt information is output; the prompt information is for indicating that the telephone call from the telephone calling party is a falsified-number telephone call; since the second telephone apparatus of the assigned entity is the authentic source of the telephone calling party, the determination result about whether the second telephone apparatus of the assigned entity is calling the telephone called party is real and effective, and thereby whether the telephone call is falsified-number telephone call may be correctly identified; meanwhile, the identifying method is based on the telephone number of the telephone calling party and confirms from the aspect of assigned entity but has no relation with the coding rule of telephone number, and thus the method is applicable in identification of all telephone numbers; furthermore, when it is identified that the telephone call is a falsified-number telephone call, a prompt is given to make the telephone called party identify the incoming call when receiving the incoming call from the telephone calling party, and thereby the telephone called party is prevented to be deceived.

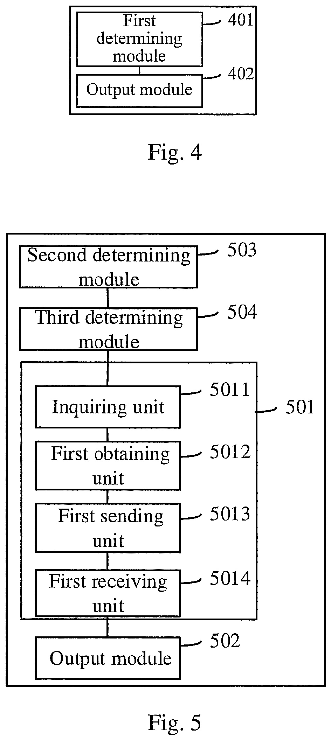

Fig. 4 is a schematic diagram showing a device for identifying a telephone call according to an exemplary embodiment. The device may be mounted in the first telephone apparatus, as shown in Fig. 4, and the device includes a first determining module 401 and an output module 402.

The first determining module 401 is configured to determine whether a second telephone apparatus of an assigned entity, said entity being affiliated with a telephone number of the telephone calling party, is calling the telephone number of the first telephone apparatus when the telephone calling party is calling the telephone number of the first telephone apparatus; the telephone number of the second telephone apparatus is the telephone number of the telephone calling party.

The output module is configured to, when the second telephone apparatus is not calling the telephone number of the first telephone apparatus, output prompt information for indicating that the telephone call from the telephone calling party is a falsified-number telephone call.

In the embodiment, when a telephone calling party is calling a telephone number of a first telephone apparatus, whether a second telephone apparatus of an assigned entity, said entity being affiliated with a telephone number of the telephone calling party, is calling the telephone number of the first telephone apparatus is determined; the telephone number of the second telephone apparatus is the telephone number of the telephone calling party; when the second telephone apparatus is not calling the telephone number of the first telephone apparatus, prompt information is output; the prompt information is for indicating that the telephone call from the telephone calling party is a falsified-number telephone call; since the second telephone apparatus of the assigned entity is the authentic source of the telephone calling party, the determination result about whether the second telephone apparatus of the assigned entity is calling the telephone called party is real and effective, and thereby whether the telephone call is falsified-number telephone call may be correctly identified; meanwhile, the identifying method is based on the telephone number of the telephone calling party and confirms from the aspect of assigned entity but has no relation with the coding rule of telephone number, and thus the method is applicable in identification of all telephone numbers; furthermore, when it is identified that the telephone call is a falsified-number telephone call, a prompt is given to make the telephone called party identify the incoming call when receiving the incoming call from the telephone calling party, and thereby the telephone called party is prevented to be deceived.

Fig. 5 is a schematic diagram showing a device for identifying a telephone call according to an exemplary embodiment. The device may be mounted in the first telephone apparatus, as shown in Fig. 5, and the device includes a first determining module 501 and an output module 502.

The first determining module 501 is configured to determine whether a second telephone apparatus of an assigned entity, said entity being affiliated with a telephone number of a telephone calling party, is calling a telephone number of a first telephone apparatus when the telephone calling party is calling the telephone number of the first telephone apparatus; the telephone number of the second telephone apparatus is the telephone number of the telephone calling party.

The output module 502 is configured to, when the second telephone apparatus is not calling the telephone number of the first telephone apparatus, output prompt information for indicating that the telephone call from the telephone calling party is a falsified-number telephone call.

In a first implementation of the embodiment, the first determining module 501 includes an inquiring unit 5011, a first obtaining unit 5012, a first sending unit 5013 and a first receiving unit 5014.

The inquiring unit 5011 is configured to inquire a preset correspondence relationship between telephone numbers and assigned entities on the assigned entity corresponding to the telephone number of the telephone calling party.

The first obtaining unit 5012 is configured to obtain the telephone number of the first telephone apparatus.

The first sending unit 5013 is configured to send the telephone number of the telephone calling party and the telephone number of the first telephone apparatus to a first server of the assigned entity; the first server is configured to inquire whether the second telephone apparatus is calling the telephone number of the first telephone apparatus currently.

The first receiving unit 5014 is configured to receive an inquiry result returned back by the first server. The inquiry result is that the second telephone apparatus is calling the telephone number of the first telephone apparatus or that the second telephone apparatus is not calling the telephone number of the first telephone apparatus .

In a second implementation of the embodiment, the device further includes a second determining module 503.

The second determining module 503 is configured to determine whether the telephone number of the telephone calling party is a telephone number stored in a contact list of the first telephone apparatus when the telephone call from the telephone calling party is received; when the telephone number of the telephone calling party is a telephone number stored in the contact list of the first telephone apparatus, it is determined that the telephone call from the telephone calling party is not a falsified-number telephone call.

In a third implementation of the embodiment, the device further includes a third determining module 504.

The third determining module 504 is configured to, when the telephone number of the telephone calling party is not a telephone number stored in the contact list of the first telephone apparatus, determine whether a coding rule of the telephone number of the telephone calling party conforms to a preset coding rule; when the coding rule of the telephone number of the telephone calling party does not conform to the preset coding rule, the prompt information is output.

In a fourth implementation of the embodiment, the first determining module 501 is further configured to, when the coding rule of the telephone number of the telephone calling party conforms to the preset coding rule, determine whether the second telephone apparatus of the assigned entity, said entity being affiliated with a telephone number of a telephone calling party, is calling the telephone number of the first telephone apparatus.

In the embodiment, when a telephone calling party is calling a telephone number of a first telephone apparatus, it is determined whether a second telephone apparatus of an assigned entity, said entity being affiliated with a telephone number of the telephone calling party, is calling the telephone number of the first telephone apparatus; the telephone number of the second telephone apparatus is the telephone number of the telephone calling party; when the second telephone apparatus is not calling the telephone number of the first telephone apparatus, prompt information is output; the prompt information is for indicating that the telephone call from the telephone calling party is a falsified-number telephone call; since the second telephone apparatus of the assigned entity is the authentic source of the telephone calling party, the determination result about whether the second telephone apparatus of the assigned entity is calling the telephone called party is real and effective, and thereby whether the telephone call is falsified-number telephone call may be correctly identified; meanwhile, the identifying method is based on the telephone number of the telephone calling party and confirms from the aspect of assigned entity but has no relation with the coding rule of telephone number, and thus the method is applicable in identification of all telephone numbers; furthermore, when it is identified that the telephone call is a falsified-number telephone call, a prompt is given to make the telephone called party identify the incoming call when receiving the incoming call from the telephone calling party, and thereby the telephone called party is prevented to be deceived.

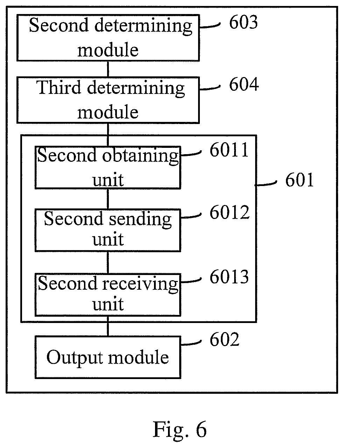

Fig. 6 is a schematic diagram showing a device for identifying a telephone call according to an exemplary embodiment. The device may be mounted in the first telephone apparatus, as shown in Fig. 6, and the device includes a first determining module 601, an output module 602, a second determining module 603 and a third determining module 604. The output module 602, the second determining module 603 and the third determining module 604 of this device are of the same configuration as that of the output module 502, the second determining module 503 and the third determining module 504 in Fig. 5, and the descriptions thereof are omitted. The differences are as follows.

The first determining module 601 includes a second obtaining unit 6011, a second sending unit 6012 and a second receiving unit 6013.

The second obtaining unit 6011 is configured to obtain the telephone number of the first telephone apparatus.

The second sending unit 6012 is configured to send the telephone number of the telephone calling party and the telephone number of the first telephone apparatus to a second server; the second server is configured to determine whether the second telephone apparatus of the assigned entity, said entity being affiliated with a telephone number of a telephone calling party, is calling the telephone number of the first telephone apparatus.

The second receiving unit 6013 is configured to receive the inquiry result returned back by the second server. The inquiry result is that the second telephone apparatus is calling the telephone number of the first telephone apparatus or that the second telephone apparatus is not calling the telephone number of the first telephone apparatus.

In the embodiment, when a telephone calling party is calling a telephone number of a first telephone apparatus, it is determined whether a second telephone apparatus of an assigned entity, said entity being affiliated with a telephone number of the telephone calling party, is calling the telephone number of the first telephone apparatus; the telephone number of the second telephone apparatus is the telephone number of the telephone calling party; when the second telephone apparatus is not calling the telephone number of the first telephone apparatus, prompt information is output; the prompt information is for indicating that the telephone call from the telephone calling party is a falsified-number telephone call; since the second telephone apparatus of the assigned entity is the authentic source of the telephone calling party, the determination result about whether the second telephone apparatus of the assigned entity is calling the telephone called party is real and effective, and thereby whether the telephone call is falsified-number telephone call may be correctly identified; meanwhile, the identifying method is based on the telephone number of the telephone calling party and confirms from the aspect of assigned entity but has no relation with the coding rule of telephone number, and thus the method is applicable in identification of all telephone numbers; furthermore, when it is identified that the telephone call is a falsified-number telephone call, a prompt is given to make the telephone called party identify the incoming call when receiving the incoming call from the telephone calling party, and thereby the telephone called party is prevented to be deceived.

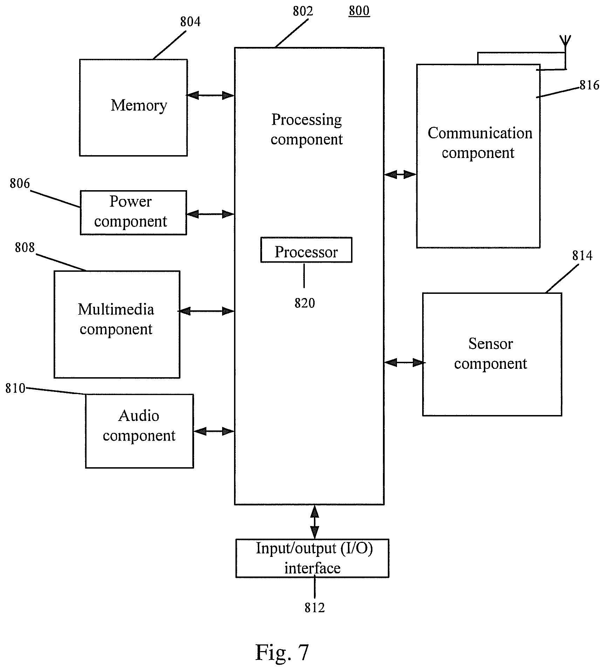

Fig. 7 is a block diagram illustrating a device for identifying the telephone call 800 according to an exemplary embodiment. For example, the device 800 may be a telephone, a VOIP apparatus or the like.

Referring to Fig. 7, the device 800 may include one or more of the following components: a processing component 802, a memory 804, a power component 806, a multimedia component 808, an audio component 810, an input/output (I/O) interface 812, a sensor component 814, and a communication component 816.

The processing component 802 usually controls overall operations of the device 800, such as operations associated with display, telephone calls, data communications, camera operations and recording operations. The processing component 802 may include one or more processors 820 to execute instructions to perform all or a part of the steps in the above described methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the device 800. Examples of such data include instructions for any application or method operated on the device 800, contact data, phonebook data, messages, pictures, videos, etc. The memory 804 may be implemented by any type of volatile or non-volatile memory device or combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or optical disk.

The power component 806 provides power to various components of the device 800. The power component 806 may include a power management system, one or more power sources, and other components associated with the generation, management, and distribution of power in the device 800.

The multimedia component 808 includes a screen for providing an output interface between the device 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, slips, and gestures on the touch panel. The touch sensors may not only sense a boundary of a touch or slip action, but also sense a period of time and a pressure associated with the touch or slip action. In some embodiments, the multimedia component 808 includes a front camera and/or a rear camera. The front camera and/or the rear camera may receive external multimedia data while the device 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone (MIC) configured to receive an external audio signal when the device 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, a button, and the like. The button may include, but not limited to: a home button, a volume button, a starting button and a locking button.

The sensor component 814 includes one or more sensors to provide status assessments of various aspects of the device 800. For instance, the sensor component 814 may detect an open/closed status of the device 800, relative position of components, e.g., the display and the keyboard, of the device 800, a change in position of the device 800 or a component of the device 800, a presence or absence of an user contact with the device 800, an orientation or an acceleration/deceleration of the device 800, and a change in temperature of the device 800. The sensor component 814 may include a proximity sensor configured to detect the presence of nearby objects without any physical contact. The sensor component 814 may further include a light sensor, such as a CMOS or CCD image sensor, for use in imaging applications. In some embodiments, the sensor component 814 may further include an accelerometer sensor, a gyroscope sensor, a magnetic sensor, a pressure sensor, or a temperature sensor.

The communication component 816 is configured to facilitate communication, in a wire or wireless manner, between the device 800 and other devices. The device 800 can access a wireless network based on a communication standard, such as WiFi, 2G or 3G, or a combination thereof. In one exemplary embodiment, the communication component 816 receives a broadcast signal or broadcast associated information from an external broadcast management system via a broadcast channel. In one exemplary embodiment, the communication component 816 further includes a near field communication (NFC) module to facilitate short-range communications. For example, the NFC module may be implemented based on a radio frequency identification (RFID) technology, an infrared data association (IrDA) technology, an ultra-bandwidth (UWB) technology, a Bluetooth (BT) technology, and other technologies.

In exemplary embodiments, the device 800 may be implemented by one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors or other electronic components, for performing the above described methods.

In exemplary embodiments, there is also provided a non-transitory computer-readable storage medium including instructions, such as included in the memory 804, executable by the processor 820 in the device 800, for performing the above-described methods. For example, the non-transitory computer-readable storage medium may be a ROM, a RAM, a CD-ROM, a magnetic tape, a floppy disc, an optical data storage device, and the like.

A non-transitory computer readable storage medium is provided. When the instructions in the storage medium is executed by the processor of the mobile terminal, the mobile terminal is caused to perform a method for identifying a telephone call, and the method includes:
determining whether a second telephone apparatus of an assigned entity, said entity being affiliated with a telephone number of a telephone calling party, is calling a telephone number of a first telephone apparatus when the telephone calling party is calling the telephone number of the first telephone apparatus, wherein the telephone number of the second telephone apparatus is the telephone number of the telephone calling party;
when the second telephone apparatus is not calling the telephone number of the first telephone apparatus, outputting prompt information for indicating that the telephone call from the telephone calling party is a falsified-number telephone call.

Other embodiments of the invention will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art. It is intended that the specification and examples be considered as exemplary only, with a true scope of the invention being indicated by the following claims.

It will be appreciated that the present invention is not limited to the exact construction that has been described above and illustrated in the accompanying drawings, and that various modifications and changes can be made without departing from the scope thereof. It is intended that the scope of the invention only be limited by the appended claims.

## Claims

1. A method for identifying a telephone call, the method comprises:
when a first telephone apparatus affiliated with a telephone number receives a telephone call from a telephone number of a telephone calling party, determining (101) whether a second telephone apparatus of an assigned entity, said entity being affiliated with the telephone number of the telephone calling party, is calling the telephone number of the first telephone apparatus, wherein the telephone number of the second telephone apparatus is the telephone number of the telephone calling party; and
when the second telephone apparatus is not calling the telephone number of the first telephone apparatus, outputting (102) prompt information for indicating that the telephone call from the telephone calling party is a falsified-number telephone call
wherein the determination of whether the second telephone apparatus of the assigned entity, said entity being affiliated with a telephone number of a telephone calling party, is calling the telephone number of the first telephone apparatus comprises:
inquiring a preset correspondence relationship between telephone numbers and assigned entities on the assigned entity corresponding to the telephone number of the telephone calling party;
obtaining the telephone number of the first telephone apparatus;
sending the telephone number of the telephone calling party and the telephone number of the first telephone apparatus to a first server of the assigned entity, wherein the first server is configured to manage operations of all telephone apparatus in the assigned entity, detect, among the managed telephone apparatus, the second telephone apparatus which is under a working state, and detect whether the second telephone apparatus which is under the working state is calling the telephone number of the first telephone apparatus currently; and
receiving a detection result returned back by the first server, wherein the detection result is that the second telephone apparatus is calling the telephone number of the first telephone apparatus currently or that the second telephone apparatus is not calling the telephone number of the first telephone apparatus currently.

2. The method according to claim 1, the method further comprises:
determining whether the telephone number of the telephone calling party is a telephone number stored in a contact list of the first telephone apparatus when the telephone call from the telephone calling party is received; and
determining that the telephone call from the telephone calling party is not a falsified-number telephone call when the telephone number of the telephone calling party is a telephone number stored in the contact list of the first telephone apparatus.

3. The method according to claim 2, the method further comprises:
when the telephone number of the telephone calling party is not a telephone number stored in the contact list of the first telephone apparatus, determining whether a coding rule of the telephone number of the telephone calling party conforms to a preset coding rule, the coding rule employing domestic and abroad telephone coding rules formulated by operators;
when the coding rule of the telephone number of the telephone calling party does not conform to the preset coding rule, outputting the prompt information.

4. The method according to claim 3, the determination of whether the second telephone apparatus of the assigned entity, said entity being affiliated with a telephone number of a telephone calling party, is calling the telephone number of the first telephone apparatus comprises:
when the coding rule of the telephone number of the telephone calling party conforms to the preset coding rule, determining whether the second telephone apparatus of the assigned entity, said entity being affiliated with a telephone number of a telephone calling party, is calling the telephone number of the first telephone apparatus.

5. A system comprising a first telephone apparatus and a first server, the first telephone apparatus comprises:
a first determining module (401) configured to, when the first telephone apparatus affiliated with a telephone number receives a telephone call from a telephone number of a telephone calling party, determine whether a second telephone apparatus of an assigned entity, said entity being affiliated with the telephone number of the telephone calling party, is calling the telephone number of a first telephone apparatus; wherein the telephone number of the second telephone apparatus is the telephone number of the telephone calling party; and
an output module (402) configured to, when the second telephone apparatus is not calling the telephone number of the first telephone apparatus, output prompt information for indicating that the telephone call from the telephone calling party is a falsified-number telephone call.
wherein the first determining module comprises:
an inquiring unit configured to inquire a preset correspondence relationship between telephone numbers and assigned entities on the assigned entity corresponding to the telephone number of the telephone calling party;
a first obtaining unit configured to obtain the telephone number of the first telephone apparatus;
a first sending unit configured to send the telephone number of the telephone calling party and the telephone number of the first telephone apparatus to a first server of the assigned entity,
wherein the first server is configured to manage operations of all telephone apparatus in the assigned entity, detect, among the managed telephone apparatus, the second telephone apparatus which is under a working state, and detect whether the second telephone apparatus which is under the working state is calling the telephone number of the first telephone apparatus currently; and
a first receiving unit configured to receive a detection result returned back by the first server, wherein the detection result is that the second telephone apparatus is calling the telephone number of the first telephone apparatus currently or that the second telephone apparatus is not calling the telephone number of the first telephone apparatus currently.

6. The system according to claim 5, the first telephone apparatus further comprises a second determining module,
the second determining module is configured to determine whether the telephone number of the telephone calling party is a telephone number stored in a contact list of the first telephone apparatus when the telephone call from the telephone calling party is received,
when the telephone number of the telephone calling party is a telephone number stored in the contact list of the first telephone apparatus, it is determined that the telephone call from the telephone calling party is not a falsified-number telephone call.

7. The system according to claim 6, the first telephone apparatus further comprises a third determining module,
the third determining module is configured to, when the telephone number of the telephone calling party is not a telephone number stored in the contact list of the first telephone apparatus, determine whether a coding rule of the telephone number of the telephone calling party conforms to a preset coding rule, the coding rule employing domestic and abroad telephone coding rules formulated by operators;
when the coding rule of the telephone number of the telephone calling party does not conform to the preset coding rule, the prompt information is output.

8. The system according to claim 7, the first determining module is further configured to, when the coding rule of the telephone number of the telephone calling party conforms to the preset coding rule, determine whether the second telephone apparatus of the assigned entity, said entity being affiliated with a telephone number of a telephone calling party, is calling the telephone number of the first telephone apparatus.

9. A computer program, which when executing on a processor of a terminal, performs a method according to any one of claims 1 to 4.

10. A recording medium readable by a computer and having recorded thereon a computer program including instructions for executing the steps of a method according to any one of claims 1 to 4.

## Patentansprüche

1. Verfahren zum Identifizieren eines Telefonanrufs, das Verfahren umfasst Folgendes:
wenn eine erste Telefonvorrichtung, die mit einer Telefonnummer verknüpft ist, einen Telefonanruf von einer Telefonnummer eines Telefonanrufers empfängt, Bestimmen (101), ob eine zweite Telefonvorrichtung einer zugewiesenen Entität, wobei die Entität mit der Telefonnummer des Telefonanrufers verknüpft ist, die Telefonnummer der ersten Telefonvorrichtung anruft, wobei die Telefonnummer der zweiten Telefonvorrichtung die Telefonnummer des Telefonanrufers ist; und
wenn die zweite Telefonvorrichtung nicht die Telefonnummer der ersten Telefonvorrichtung anruft, Ausgeben (102) von Eingabeaufforderungsinformationen zum Anzeigen, dass der Telefonanruf des Telefonanrufers ein Telefonanruf mit einer gefälschten Nummer ist
wobei die Bestimmung, ob die zweite Telefonvorrichtung der zugewiesenen Entität, wobei die Entität mit einer Telefonnummer des Telefonanrufers verknüpft ist, die Telefonnummer der ersten Telefonvorrichtung anruft, Folgendes umfasst:
Abfragen einer voreingestellten Entsprechungsbeziehung zwischen Telefonnummern und zugewiesenen Entitäten bei der zugewiesenen Entität, die der Telefonnummer des Telefonanrufers entspricht;
Erhalten der Telefonnummer der ersten Telefonvorrichtung;
Senden der Telefonnummer des Telefonanrufers und der Telefonnummer der ersten Telefonvorrichtung an einen ersten Server der zugewiesenen Entität, wobei der erste Server dazu ausgelegt ist, einen Betrieb von allen Telefonvorrichtungen in der zugewiesenen Entität zu verwalten, unter den verwalteten Telefonvorrichtungen die zweite Telefonvorrichtung zu detektieren, die sich in einem Arbeitszustand befindet, und zu detektieren, ob die zweite Telefonvorrichtung, die sich im Arbeitszustand befindet, derzeit die Telefonnummer der ersten Telefonvorrichtung anruft; und
Empfangen eines Detektionsergebnisses, das vom ersten Server zurückgegeben wird, wobei das Detektionsergebnis das ist, dass die zweite Telefonvorrichtung die Telefonnummer der ersten Telefonvorrichtung derzeit anruft oder dass die zweite Telefonvorrichtung die Telefonnummer der ersten Telefonvorrichtung derzeit nicht anruft.

2. Verfahren nach Anspruch 1, das Verfahren umfasst ferner Folgendes:
Bestimmen, ob die Telefonnummer des Telefonanrufers eine Telefonnummer ist, die in einer Kontaktliste der ersten Telefonvorrichtung gespeichert ist, wenn der Telefonanruf vom Telefonanrufer empfangen wird; und
Bestimmen, dass der Telefonanruf vom Telefonanrufer kein Telefonanruf mit einer gefälschten Nummer ist, wenn die Telefonnummer des Telefonanrufers eine Telefonnummer ist, die in der Kontaktliste der ersten Telefonvorrichtung gespeichert ist.

3. Verfahren nach Anspruch 2, das Verfahren umfasst ferner Folgendes:
wenn die Telefonnummer des Telefonanrufers keine Telefonnummer ist, die in der Kontaktliste der ersten Telefonvorrichtung gespeichert ist, Bestimmen, ob eine Codierregel der Telefonnummer des Telefonanrufers mit einer voreingestellten Codierregel konform ist, wobei die Codierregel, von der inländische und ausländische Telefoncodierregeln eingesetzt werden, von Betreibern formuliert werden;
wenn die Codierregel der Telefonnummer des Telefonanrufers nicht mit der voreingestellten Codierregel konform ist, Ausgeben der Eingabeaufforderungsinformationen.

4. Verfahren nach Anspruch 3, die Bestimmung, ob die zweite Telefonvorrichtung der zugewiesenen Entität, wobei die Entität mit einer Telefonnummer des Telefonanrufers verknüpft ist, die Telefonnummer der ersten Telefonvorrichtung anruft, umfasst Folgendes:
wenn die Codierregel der Telefonnummer des Telefonanrufers mit der voreingestellten Codierregel konform ist, Bestimmen, ob die zweite Telefonvorrichtung der zugewiesenen Entität, wobei die Entität mit einer Telefonnummer eines Telefonanrufers verknüpft ist, die Telefonnummer der ersten Telefonvorrichtung anruft.

5. System, das eine erste Telefonvorrichtung und einen ersten Server umfasst, die erste Telefonvorrichtung umfasst Folgendes:
ein erstes Bestimmungsmodul (401), das, wenn die erste Telefonvorrichtung, die mit einer Telefonnummer verknüpft ist, einen Telefonanruf von einer Telefonnummer eines Telefonanrufers empfängt, dazu ausgelegt ist zu bestimmen, ob eine zweite Telefonvorrichtung einer zugewiesenen Entität, wobei die Entität mit der Telefonnummer des Telefonanrufers verknüpft ist, die Telefonnummer einer ersten Telefonvorrichtung anruft; wobei die Telefonnummer der zweiten Telefonvorrichtung die Telefonnummer des Telefonanrufers ist; und
ein erstes Ausgabemodul (402), das, wenn die zweite Telefonvorrichtung nicht die Telefonnummer der ersten Telefonvorrichtung anruft, dazu ausgelegt ist, zum Anzeigen, dass der Telefonanruf des Telefonanrufers ein Telefonanruf mit einer gefälschten Nummer ist, Eingabeaufforderungsinformationen auszugeben.
wobei das erste Bestimmungsmodul Folgendes umfasst:
eine Abfrageeinheit, die dazu ausgelegt ist, eine voreingestellte Entsprechungsbeziehung zwischen Telefonnummern und zugewiesenen Entitäten bei der zugewiesenen Entität, die der Telefonnummer des Telefonanrufers entspricht, abzufragen;
eine erste Erhaltungseinheit, die dazu ausgelegt ist, die Telefonnummer der ersten Telefonvorrichtung zu erhalten;
eine erste Sendeeinheit, die dazu ausgelegt ist, die Telefonnummer des Telefonanrufers und die Telefonnummer der ersten Telefonvorrichtung an einen ersten Server der zugewiesenen Entität zu senden,
wobei der erste Server dazu ausgelegt ist, einen Betrieb von allen Telefonvorrichtungen in der zugewiesenen Entität zu verwalten, unter den verwalteten Telefonvorrichtungen die zweite Telefonvorrichtung zu detektieren, die sich in einem Arbeitszustand befindet, und zu detektieren, ob die zweite Telefonvorrichtung, die sich im Arbeitszustand befindet, derzeit die Telefonnummer der ersten Telefonvorrichtung anruft; und
eine erste Empfangseinheit, die dazu ausgelegt ist, ein Detektionsergebnis, das vom ersten Server zurückgegeben wird, zu empfangen, wobei das Detektionsergebnis das ist, dass die zweite Telefonvorrichtung die Telefonnummer der ersten Telefonvorrichtung derzeit anruft oder dass die zweite Telefonvorrichtung die Telefonnummer der ersten Telefonvorrichtung derzeit nicht anruft.

6. System nach Anspruch 5, die erste Telefonvorrichtung umfasst ferner ein zweites Bestimmungsmodul,
das zweite Bestimmungsmodul ist dazu ausgelegt zu bestimmen, ob die Telefonnummer des Telefonanrufers eine Telefonnummer ist, die in einer Kontaktliste der ersten Telefonvorrichtung gespeichert ist, wenn der Telefonanruf vom Telefonanrufer empfangen wird,
wenn die Telefonnummer des Telefonanrufers eine Telefonnummer ist, die in der Kontaktliste der ersten Telefonvorrichtung gespeichert ist, wird bestimmt, dass der Telefonanruf vom Telefonanrufer kein Telefonanruf mit einer gefälschten Nummer ist.

7. System nach Anspruch 6, die erste Telefonvorrichtung umfasst ferner ein drittes Bestimmungsmodul,
das dritte Bestimmungsmodul ist, wenn die Telefonnummer des Telefonanrufers keine Telefonnummer ist, die in der Kontaktliste der ersten Telefonvorrichtung gespeichert ist, dazu ausgelegt zu bestimmen, ob eine Codierregel der Telefonnummer des Telefonanrufers mit einer voreingestellten Codierregel konform ist, wobei die Codierregel, von der inländische und ausländische Telefoncodierregeln eingesetzt werden, von Betreibern formuliert werden;
wenn die Codierregel der Telefonnummer des Telefonanrufers nicht mit der voreingestellten Codierregel konform ist, werden die Eingabeaufforderungsinformationen ausgegeben.

8. System nach Anspruch 7, das erste Bestimmungsmodul ist, wenn die Codierregel der Telefonnummer des Telefonanrufers mit der voreingestellten Codierregel konform ist, ferner dazu ausgelegt zu bestimmen, ob die zweite Telefonvorrichtung der zugewiesenen Entität, wobei die Entität mit einer Telefonnummer eines Telefonanrufers verknüpft ist, die Telefonnummer der ersten Telefonvorrichtung anruft.

9. Computerprogramm, das, wenn es auf einem Prozessor eines Endgeräts ausgeführt wird, ein Verfahren nach einem der Ansprüche 1 bis 4 durchführt.

10. Aufzeichnungsmedium, das von einem Computer lesbar ist und auf dem ein Computerprogramm aufgezeichnet ist, das Anweisungen zum Ausführen der Schritte eines Verfahrens nach einem der Ansprüche 1 bis 4 beinhaltet.

## Revendications

1. Procédé pour l'identification d'un appel téléphonique, le procédé comprend :
lorsqu'un premier appareil téléphonique affilié à un numéro de téléphone reçoit un appel téléphonique provenant d'un numéro de téléphone d'un appelant téléphonique, la détermination (101) de si un second appareil téléphonique d'une entité attribuée, ladite entité étant affiliée au numéro de téléphone de l'appelant téléphonique, est en train d'appeler le numéro de téléphone du premier appareil téléphonique, dans lequel le numéro de téléphone du second appareil téléphonique est le numéro de téléphone de l'appelant téléphonique ; et
lorsque le second appareil téléphonique n'est pas en train d'appeler le numéro de téléphone du premier appareil téléphonique, la sortie (102) d'informations de signalement pour indiquer que l'appel téléphonique provenant de l'appelant téléphonique est un appel téléphonique par numéro falsifié
dans lequel la détermination de si le second appareil téléphonique de l'entité attribuée, ladite entité étant affiliée à un numéro de téléphone d'un appelant téléphonique, est en train d'appeler le numéro de téléphone du premier appareil téléphonique comprend :
l'interrogation d'une relation de correspondance prédéfinie entre numéros de téléphone et entités attribuées sur l'entité attribuée correspondant au numéro de téléphone de l'appelant téléphonique ;
l'obtention du numéro de téléphone du premier appareil téléphonique ;
l'envoi du numéro de téléphone de l'appelant téléphonique et du numéro de téléphone du premier appareil téléphonique à un premier serveur de l'entité attribuée, dans lequel le premier serveur est configuré pour gérer des opérations de tous les appareils téléphoniques dans l'entité attribuée, détecter, parmi les appareils téléphoniques gérés, le second appareil téléphonique qui est dans un état de fonctionnement, et détecter si le second appareil téléphonique qui est dans l'état de fonctionnement est en train d'appeler le numéro de téléphone du premier appareil téléphonique actuellement ; et
la réception d'un résultat de détection renvoyé en retour par le premier serveur, dans lequel le résultat de détection est que le second appareil téléphonique est en train d'appeler le numéro de téléphone du premier appareil téléphonique actuellement ou que le second appareil téléphonique n'est pas en train d'appeler le numéro de téléphone du premier appareil téléphonique actuellement.

2. Procédé selon la revendication 1, le procédé comprend en outre :
la détermination de si le numéro de téléphone de l'appelant téléphonique est un numéro de téléphone stocké dans une liste de contacts du premier appareil téléphonique lorsque l'appel téléphonique provenant de l'appelant téléphonique est reçu ; et
la détermination que l'appel téléphonique provenant de l'appelant téléphonique n'est pas un appel téléphonique par numéro falsifié lorsque le numéro de téléphone de l'appelant téléphonique est un numéro de téléphone stocké dans la liste de contacts du premier appareil téléphonique.

3. Procédé selon la revendication 2, le procédé comprend en outre :
lorsque le numéro de téléphone de l'appelant téléphonique n'est pas un numéro de téléphone stocké dans la liste de contacts du premier appareil téléphonique, la détermination de si une règle de codage du numéro de téléphone de l'appelant téléphonique se conforme à une règle de codage prédéfinie, la règle de codage employant des règles de codage téléphonique nationales et internationales formulées par des opérateurs ;
lorsque la règle de codage du numéro de téléphone de l'appelant téléphonique ne se conforme pas à la règle de codage prédéfinie, la sortie des informations de signalement.

4. Procédé selon la revendication 3, la détermination de si le second appareil téléphonique de l'entité attribuée, ladite entité étant affiliée à un numéro de téléphone d'un appelant téléphonique, est en train d'appeler le numéro de téléphone du premier appareil téléphonique comprend :
lorsque la règle de codage du numéro de téléphone de l'appelant téléphonique se conforme à la règle de codage prédéfinie, la détermination de si le second appareil téléphonique de l'entité attribuée, ladite entité étant affiliée à un numéro de téléphone d'un appelant téléphonique, est en train d'appeler le numéro de téléphone du premier appareil téléphonique.

5. Système comprenant un premier appareil téléphonique et un premier serveur, le premier appareil téléphonique comprend :
un premier module de détermination (401) configuré pour, lorsque le premier appareil téléphonique affilié à un numéro de téléphone reçoit un appel téléphonique provenant d'un numéro de téléphone d'un appelant téléphonique, déterminer si un second appareil téléphonique d'une entité attribuée, ladite entité étant affiliée au numéro de téléphone de l'appelant téléphonique, est en train d'appeler le numéro de téléphone d'un premier appareil téléphonique ; dans lequel le numéro de téléphone du second appareil téléphonique est le numéro de téléphone de l'appelant téléphonique ; et
un module de sortie (402) configuré pour, lorsque le second appareil téléphonique n'est pas en train d'appeler le numéro de téléphone du premier appareil téléphonique, délivrer en sortie des informations de signalement pour indiquer que l'appel téléphonique provenant de l'appelant téléphonique est un appel téléphonique par numéro falsifié,
dans lequel le premier module de détermination comprend :
une unité d'interrogation configurée pour interroger une relation de correspondance prédéfinie entre numéros de téléphone et entités attribuées sur l'entité attribuée correspondant au numéro de téléphone de l'appelant téléphonique ;
une première unité d'obtention configurée pour obtenir le numéro de téléphone du premier appareil téléphonique ;
une première unité d'envoi configurée pour envoyer le numéro de téléphone de l'appelant téléphonique et le numéro de téléphone du premier appareil téléphonique à un premier serveur de l'entité attribuée,
dans lequel le premier serveur est configuré pour gérer des opérations de tous les appareils téléphoniques dans l'entité attribuée, détecter, parmi les appareils téléphoniques gérés, le second appareil téléphonique qui est dans un état de fonctionnement, et détecter si le second appareil téléphonique qui est dans l'état de fonctionnement est en train d'appeler le numéro de téléphone du premier appareil téléphonique actuellement ; et
une première unité de réception configurée pour recevoir un résultat de détection renvoyé en retour par le premier serveur, dans lequel le résultat de détection est que le second appareil téléphonique est en train d'appeler le numéro de téléphone du premier appareil téléphonique actuellement ou que le second appareil téléphonique n'est pas en train d'appeler le numéro de téléphone du premier appareil téléphonique actuellement.

6. Système selon la revendication 5, le premier appareil téléphonique comprend en outre un deuxième module de détermination,
le deuxième module de détermination est configuré pour déterminer si le numéro de téléphone de l'appelant téléphonique est un numéro de téléphone stocké dans une liste de contacts du premier appareil téléphonique lorsque l'appel téléphonique provenant de l'appelant téléphonique est reçu,
lorsque le numéro de téléphone de l'appelant téléphonique est un numéro de téléphone stocké dans la liste de contacts du premier appareil téléphonique, il est déterminé que l'appel téléphonique provenant de l'appelant téléphonique n'est pas un appel téléphonique par numéro falsifié.

7. Système selon la revendication 6, le premier appareil téléphonique comprend en outre un troisième module de détermination,
le troisième module de détermination est configuré pour, lorsque le numéro de téléphone de l'appelant téléphonique n'est pas un numéro de téléphone stocké dans la liste de contacts du premier appareil téléphonique, déterminer si une règle de codage du numéro de téléphone de l'appelant téléphonique se conforme à une règle de codage prédéfinie, la règle de codage employant des règles de codage téléphonique nationales et internationales formulées par des opérateurs ;
lorsque la règle de codage du numéro de téléphone de l'appelant téléphonique ne se conforme pas à la règle de codage prédéfinie, les informations de signalement sont délivrées en sortie.

8. Système selon la revendication 7, le premier module de détermination est en outre configuré pour, lorsque la règle de codage du numéro de téléphone de l'appelant téléphonique se conforme à la règle de codage prédéfinie, déterminer si le second appareil téléphonique de l'entité attribuée, ladite entité étant affiliée à un numéro de téléphone d'un appelant téléphonique, est en train d'appeler le numéro de téléphone du premier appareil téléphonique.

9. Programme d'ordinateur, qui lors de son exécution sur un processeur d'un terminal, réalise un procédé selon l'une quelconque des revendications 1 à 4.

10. Support d'enregistrement lisible par un ordinateur et ayant, enregistré sur celui-ci, un programme d'ordinateur incluant des instructions pour l'exécution des étapes d'un procédé selon l'une quelconque des revendications 1 à 4.
